# FASCICULE DE BREVET EUROPEEN

(11) **EP 3 230 231 B1**
(45) Date de publication et mention de la délivrance du brevet: **12.07.2023**
(21) Numéro de dépôt: 15817979.6
(22) Date de dépôt: 08.12.2015
(51) Int. Cl.: C04B 28/00, C04B 28/04, C04B 28/08, C04B 111/00, C04B 111/92, H01B 3/30, H01B 7/295, C04B 28/26, H01B 3/14, H01B 3/48, C04B 111/28, C04B 111/50, C04B 111/80

(54) **CABLE OU ACCESSOIRE POUR CABLE COMPORTANT UNE COUCHE RESISTANTE AU FEU**
KABEL ODER KABELZUBEHÖR MIT EINER FEUERBESTÄNDIGEN SCHICHT
CABLE OR CABLE ACCESSORY WITH A FIRE-RESISTANT LAYER

(30) Priorité: 10.12.2014 FR 1462188
(43) Date de publication de la demande: 18.10.2017
(73) Titulaire: Nexans, 75008 Paris (FR)
(72) Inventeur: GYPPAZ, Franck, 69007 Lyon (FR); AUVRAY, Thierry, 69006 Lyon (FR)
(74) Mandataire: Ipsilon
(86) Numéro de dépôt international: PCT/FR2015/053372
(87) Numéro de publication internationale: WO 2016/092200

(56) Documents cités:
- EP-A1- 2 767 984
- FR-A1- 2 604 994
- US-A- 1 524 573
- US-A- 4 430 384
- US-A- 4 509 985
- US-B2- 6 831 118
- DAVIDOVITS: "30 Years of Successes and Failures in Geopolymer Applications. Market Trends and Potential Breakthroughs", GEOPOLYMER CONFERENCE, XX, XX, 29 octobre 2002 (2002-10-29), pages 1-16, XP002291216,

## Description

La présente invention est relative à un dispositif comprenant un câble et/ou un accessoire pour câble, ledit câble et/ou l'accessoire pour câble comportant au moins une couche isolante et résistance au feu, ainsi qu'à un procédé de préparation d'un tel câble et/ou accessoire.

Elle s'applique typiquement, mais non exclusivement, aux domaines des câbles électriques et/ou de transmissions de données, en particulier des câbles de sécurité résistants au feu, notamment sans halogène, susceptibles de fonctionner pendant un laps de temps donné dans des conditions d'incendie, sans être pour autant propagateur d'incendie ni générateur de fumées importantes, ainsi qu'à leurs accessoires tels que jonctions et/ou terminaisons. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

Un câble d'énergie et/ou de télécommunication est un câble destiné au transport de l'énergie électrique et/ou à la transmission de données. Il comprend classiquement un ou plusieurs éléments conducteurs isolés, ou en d'autres termes un ou plusieurs conducteur(s) électrique(s) allongé(s) entouré(s) par au moins une couche isolante. La couche isolante peut être typiquement une couche polymère électriquement isolante en contact physique avec le ou les conducteur(s) électrique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les 2 fonctions d'isolant électrique et de gaine de protection.

Les matériaux généralement utilisés pour former la couche isolante et/ou ladite gaine de protection sont généralement des matériaux composites à base de polymères, en particulier de polymères siliconés, et de divers adjuvants notamment des charges de renfort telles que de la silice et des charges ignifugeantes destinées à améliorer leur résistance au feu. A titre d'exemple, on peut citer la demande EP 2 767 984 qui décrit des couches isolantes à base de charges inorganiques, telles que des particules de mica.

Malgré la présence de telles charges, la résistance au feu de ces couches isolantes ne donne pas toujours entièrement satisfaction.

Afin de rendre un ou plusieurs câbles résistants au feu, il a également déjà été proposé, notamment dans la demande de brevet EP-A1-2 760 030, de recouvrir lesdits câbles d'une couche électriquement isolante comprenant plusieurs bandes isolantes superposées comprenant du mica et des fibres de verre, et un liant polymère (e.g. polyorganosiloxane) au contact de chacune desdites bandes isolantes. Toutefois, le coût de production de ladite couche électriquement isolante est élevé (i.e. temps de préparation très long) et celle-ci présente un grand encombrement.

Le brevet US 4 430 384 décrit l'emploi d'un ruban refractaire à base d'un matériau poreux (« *porous base fabric* »), d'un matériau réfractaire de type alumine ou zircone finement divisé, et d'un agent d'adhésion du matériau réfractaire sur le matériau poreux, où le matéraiu poreux est de préférence un matériau à base de fibres de verre tisées.

Le ciment est une matière minérale pulvérulente formant avec l'eau ou avec une solution saline une pâte de ciment liante, capable d'agglomérer, en durcissant, des substances variées. Le durcissement se produit par simple hydratation d'aluminates de calcium et de silicates de calcium et la pâte de ciment liante conserve après durcissement, sa résistance et sa stabilité. Cette pâte de ciment liante est également appelée matériau cimentaire. Les ciments sont classés selon la norme EN-197-1-2000 en cinq grandes familles : le ciment Portland (CEM I), le ciment portland composé (CEM II), le ciment de hauts fourneaux (CEM III), le ciment pouzzolanique (CEM IV) et le ciment composé ou ciment au laitier et aux cendres (CEM V). Le ciment blanc est un ciment Portland sans oxyde métallique. Le ciment artificiel est généralement obtenu par cuisson de mélanges de silice, d'alumine, de carbonate de chaux, et éventuellement d'oxydes métalliques tels que l'oxyde de fer.

Les géopolymères sont considérés comme des liants alternatifs pouvant se substituer aux matériaux cimentaires précités. Les géopolymères sont essentiellement des composés chimiques minéraux ou des mélanges de composés constitués de motifs de type silico-oxyde (-Si-O-Si-O-), silico-aluminate (-Si-O-AI-O-), ferro-silico-aluminate (-Fe-O-Si-O-AI-O-), ou alumino-phosphate (-AI-O-P-O-), créés par un processus de géopolymérisation (i.e. polycondensation). Les géopolymères peuvent être utilisés seuls ou en mélange avec des polymères organiques, des fibres minérales, métalliques, ou organiques (e.g. fibres de verre, fibres céramiques, etc...), du carbone, du graphite, etc... selon le type d'application recherchée. Les géopolymères sont généralement capables de polymériser et de durcir à la température ambiante (ciments géopolymères). Il est également possible d'accélérer la vitesse de polymérisation et donc de durcissement des géopolymères en les soumettant à un traitement thermique.

Les géopolymères les plus courants sont ceux basés sur les aluminosilicates désignés sous le terme « poly(sialate) » [ou « poly(silico-oxo-aluminate » ou (-Si-O-Al-O-)ₙ avec n désignant le degré de polymérisation]. Ces géopolymères aluminosilicates résultent de la polycondensation d'oligomères de type oligo(sialate) formés à partir d'un mélange d'au moins un aluminosilicate, d'un réactif alcalin (e.g. silicate de sodium ou de potassium) et d'eau. Les géopolymères basés sur les aluminosilicates ont été groupés en trois familles en fonction du rapport atomique Si/AI, lequel pouvant être égale à 1, 2 ou 3. On distingue les poly(sialates) répondant à la formule Mₙ(-Si-O-Al-O-)ₙ ou (M)-PS, les poly(sialate-siloxos) répondant à la formule Mₙ(-Si-O-Al-O-Si-O-)ₙ ou (M)-PPS, et les poly(sialate-disiloxos) répondant à la formule Mₙ(-Si-O-Al-O-Si-O-Si-O)ₙ ou (M)-PSDS, avec M représentant au moins un cation alcalin ou alcalino-terreux tel que K, Na, ou Li ou Cs et n désignant le degré de polymérisation.

Des ciments géopolymères sont notamment connus du brevet US 4,509,985.

Les ciments géopolymères sont utilisés dans de nombreuses applications : conception de nouveaux matériaux dans les domaines du génie civil et de la construction, création de sculptures, fabrication de cloisons et de portes coupe-feu pour la protection contre les incendies, et tout récemment comme structure de la « boîte noire » embarquée dans les avions.

A titre d'exemple, la demande de brevet US 6,831,118 décrit un panneau anti-feu flexible comprenant une matrice en matière plastique (e.g. polyuréthane élastique souple) et un matériau de remplissage inorganique (e.g. grains de géopolymères) qui peut être utilisé pour la protection contre le feu des ouvertures dans les murs, et également des passages pour câbles. On peut également citer la demande FR 2 0604 994 qui décrit dans son exemple 3 des matériaux composites à base de fibres non tissées, dont la matrice minérale est un composé géopolymère, ou bien le brevet US 6 831 118 qui décrit des panneaux anti-feu utilisables pour le passage de câbles et incluant un matériau de remplissage qui peut être à base de géopolymère/

Des compositions de type céramique sont par ailleurs connues pour remplir et boucher des passages pour câbles de manière à éviter la propagation d'un incendie d'une pièce à une autre. En particulier, la demande de brevet JP2013-060543 décrit une composition comprenant de 25 à 65% en masse d'une solution de silicate de sodium (également bien connu sous l'anglicisme « *waterglass* ») ; de 10 à 45% en masse d'hydroxyde de magnésium ou d'aluminium ; de 10 à 45% en masse de charge inactive telle que du talc ; et de 2 à 10% d'une dispersion de microparticules de caoutchouc (e.g. styrène-butadiène) dans un milieu aqueux, ladite dispersion comprenant de 30 à 60% en masse desdites microparticules. Cette composition n'est cependant pas adaptée pour servir de couche isolante et résistante au feu dans un câble.

Aucun des documents précités de l'art antérieur ne décrit un câble électrique ou de transmission de données ou l'un de ses accessoires comportant une couche isolante et résistante au feu à base d'une composition ou d'un matériau géopolymère. Par ailleurs, les solutions proposées ne sont pas forcément compatibles avec la conservation des bonnes propriétés mécaniques et diélectriques des matériaux de protection.

L'emploi de géopolymère dans le domaine des câbles a certes été envisagé, notamment dans US 1 524 573 ou bien lors de le compte rendu de la GEOPOLYMER CONFERENCE du 29.10.2002 (« 30 Years of Successes and Failures in Geopolymer Applications. Market Trends and Potential Breakthrough », pages 1-16), mais non spécifiquement pour la constitution de couches internes de câbles.

Le but de la présente invention est de pallier les inconvénients des techniques de l'art antérieur en proposant à un coût avantageux un câble d'énergie et/ou de télécommunication et/ou un accessoire pour câbles présentant une bonne résistance au feu tout en ayant de bonnes propriétés mécaniques et un coût de revient avantageux.

La présente invention a donc pour premier objet un dispositif tel que défini dans la revendication 1, comprenant un câble d'énergie et/ou de télécommunication et/ou un accessoire pour câble, caractérisé en ce que ledit câble et/ou ledit accessoire pour câble comprend au moins une couche isolante résistante au feu à base d'un matériau composite comprenant au moins un matériau cimentaire représentant de 5 à 95 % en masse par rapport à la masse totale du matériau composite et au moins un matériau fibreux non tissé de structure souple et flexible, et en ce que ladite couche est une couche interne dudit câble ou dudit accessoire pour câble.

Un câble d'énergie et/ou de télécommunication comprend généralement au moins un élément conducteur allongé et au moins une gaine isolante de protection.

Un accessoire pour câble tel qu'une jonction ou une terminaison comprend généralement un assemblage de plusieurs couches de matériaux généralement de type caoutchouc silicone, une ou plusieurs couches de renfort, par exemple une ou plusieurs couches métalliques, ainsi qu'une gaine externe de protection anti-feu telle que par exemple un ruban élastomère ou une bande de mica.

Selon l'invention, on entend par « couche interne », une couche qui ne constitue pas la couche la plus externe du dispositif, et plus particulièrement :
- dans le cas d'un câble, une couche interposée entre l'élément conducteur allongé et une gaine isolante de protection, ladite couche étant ou non en contact direct avec l'élément conducteur allongé et
- dans le cas d'une jonction ou d'une terminaison, une couche interposée entre la gaine externe de protection anti-feu et l'une des couches de matériau de type caoutchouc silicone et/ou l'une des couches de renfort, ladite couche étant ou non en contact direct avec ladite gaine externe.

Dans la présente invention, l'expression « matériau cimentaire » signifie un matériau solide comprenant du silicium (Si), de l'aluminium (AI), de l'oxygène (O) et au moins un élément choisi parmi le potassium (K), le sodium (Na), le lithium (Li), le césium (Cs) et le calcium (Ca), ledit matériau solide étant un ciment géopolymère ou étant issu d'un mélange constitué d'un ciment anhydre et d'eau.

Grâce à la présence de la couche isolante, le dispositif conforme à l'invention présente une bonne résistance au feu tout en ayant de bonnes propriétés mécaniques. En particulier, le matériau composite entrant dans la composition de la couche isolante résistante au feu est notamment assez flexible pour permettre la manipulation du câble (e.g. enroulage, pliage, torsion) sans pour autant entrainer d'altération rédhibitoire de ladite couche qui aurait pour conséquence de diminuer sa cohésion et sa résistance au feu. Par ailleurs, la couche isolante résistante au feu reste intacte de la température ambiante à des températures supérieures ou égales à 1000°C pendant une durée pouvant aller jusqu'à 120 min, notamment atteintes lors d'un incendie.

Avantageusement le dispositif conforme à l'invention satisfait à au moins l'une quelconque des normes de résistance au feu suivantes : EN50200, IEC60331-11, IEC60331-21, IEC60331-23, IEC60331-25, DIN4102, NBN713020 addendum 3, EN50577, NFC32070 CR1 et BS6387CWZ.

Avantageusement, la couche isolante à base du matériau composite défini précédemment satisfait à la norme de résistance au feu IEC 60331-11, avec des câbles électriques sous une tension de 20 kV à 775°C pendant 60 minutes.

La couche de matériau composite présente de préférence une épaisseur allant de 0,2 à 10 mm environ, et de préférence allant de 0,5 à 6 mm environ.

Selon une première forme de réalisation de l'invention, le matériau cimentaire est issu d'un mélange constitué d'un ciment anhydre conventionnel et d'eau. Le durcissement provient alors de l'hydratation de silicates de calcium et d'aluminates de calcium.

Le ciment anhydre peut être du ciment Portland et en particulier du ciment blanc, ou du ciment au laitier et aux cendres.

Selon une seconde forme de réalisation de l'invention, le matériau cimentaire est un ciment géopolymère.

Dans la présente invention, le terme ciment géopolymère, ou durcissement d'une composition géopolymère, indique que le durcissement s'effectue par réaction interne du type polycondensation ou du type hydrothermal et qu'il n'est pas le résultat d'un simple séchage, comme c'est généralement le cas pour des liants à base de silicates alcalins.

En effet, les ciments géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Le ciment géopolymère peut être un ciment géopolymère aluminosilicate.

Le ciment géopolymère aluminosilicate peut être choisi parmi les poly(sialates) répondant à la formule (I) Mₙ(-Si-O-Al-O-)ₙ [(M)-PS], les poly(sialate-siloxos) répondant à la formule (II) Mₙ(-Si-O-Al-O-Si-O-)ₙ [(M)-PPS], les poly(sialate-disiloxos) répondant à la formule (III) Mn(-Si-O-Al-O-Si-O-Si-O)ₙ [(M)-PSDS], formules dans lesquelles M représente au moins un cation alcalin K, Na, Li, Cs ou l'un de leurs mélanges, et n désigne le degré de polymérisation. Dans le composé de formule (I) le rapport molaire Si/AI est de 1, dans le composé de formule (II) le rapport molaire Si/AI est de 2, et dans le composé de formule (III), il est de 3.

Le rapport molaire Si/AI influence les propriétés mécaniques du ciment géopolymère, en particulier ses propriétés de résistance à une contrainte mécanique (Module de Young). Selon une forme de réalisation préférée de l'invention, le ciment géopolymère est choisi parmi les composés dans lesquels le rapport molaire Si/AI varie de 1,9 à 3 environ et encore plus préférentiellement de 1,9 à 2,5 environ. Le choix de ces ciments géopolymère permet d'avoir une couche isolante résistante au feu tout en étant assez flexible pour permettre au dispositif conforme à l'invention d'être manipulé sans entrainer de fissures du matériau composite.

Selon l'invention, le matériau cimentaire représente de préférence de 70 à 90 % en masse environ, par rapport à la masse totale du matériau composite.

Le matériau fibreux non tissé entrant dans la composition du matériau composite de la couche isolante résistante au feu selon l'invention peut être choisi parmi des matériaux tels que le papier, en particulier le papier buvard ; les fibres de verre ; les matériaux non tissés fabriqués à partir de cellulose fonctionnalisée ou non fonctionnalisée ; les matériaux à matrice poreuse et/ou fibreuse, en particulier les matrices de polypropylène alvéolaires, les matrices à structure alvéolaire et/ou fibreuse fabriquées à partir de fibres naturelles d'acétate de cellulose. Selon une forme de réalisation préférée de l'invention, le matériau fibreux non tissé est choisi parmi les matrices à structure alvéolaire et/ou fibreuse fabriquées à partir de fibres naturelles d'acétate de cellulose.

Le matériau fibreux peut en particulier se présenter sous la forme d'une bande ou d'un ruban.

Selon une forme de réalisation préférée de l'invention, le matériau fibreux représente de 5 à 95 % en masse environ, et encore plus préférentiellement de 10 à 30 % en masse environ, par rapport à la masse totale du matériau composite.

Selon une forme de réalisation particulière et préférée de l'invention, le matériau composite comprend en outre au moins un additif organique à structure polymère. Cet additif est destiné à améliorer la cohésion du matériau composite et son adhérence sur la couche du câble ou de l'accessoire avec laquelle il est destiné à être en contact. L'additif organique à structure polymère est de préférence choisi parmi le polypropylène, en particulier sous forme de fibres ; les copolymères de styrène-butadiène (SBR) ; les copolymères de styrène-butadiène-éthylène (EBS) ; les dérivés des copolymères de styrène-éthylène, notamment ceux commercialisés par Kraton tels que les copolymères de styrène-éthylène-butylène-styrène (SEBS), les copolymères de styrène-butadiène-styrène (SBS), les copolymères de styrène-isoprène-styrène (SIS), les copolymères de styrène-propylène-éthylène (EPS) ou les copolymères de styrène-éthylène-propylène- styrène (SEPS) ; les copolymères d'éthylène et d'acétate de vinyle (EVA), les polyorganosiloxanes réticulés (e.g. à l'aide d'un peroxyde) ; le polyéthylène éventuellement sous forme de poudre ; les lignosulfonates ; la cellulose et ses dérivés tels que l'acétate de cellulose ; et l'un de leurs mélanges.

Lorsqu'il est utilisé, l'additif polymère représente de préférence de 2 à 70 % en masse environ, et encore plus préférentiellement de 30 à 50 % en masse environ, par rapport à la masse totale du matériau composite selon l'application et la flexibilité recherchée.

La couche comportant au moins un matériau cimentaire peut en outre comprendre un ou plusieurs additifs choisis parmi les additifs organiques, les additifs inorganiques et leurs mélanges. Parmi ces additifs on peut tout particulier mentionner les agents retardant la prise en masse de la composition cimentaire à température ambiante et qui permettent à celle-ci de rester malléable plus longtemps. De tels agents retardateurs peuvent notamment être choisis parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, les sels saturés, et leurs mélanges.

Selon une forme de réalisation particulièrement préférée de l'invention, l'agent retardateur est choisi parmi les lignosulfonates.

Lorsqu'il est utilisé, l'agent retardateur représente de préférence de 5 à 60 % en masse environ, et encore plus préférentiellement de 10 à 30 % en masse environ, par rapport à la masse totale du matériau composite.

Lorsque le dispositif conforme à l'invention est un câble d'énergie et/ou de télécommunication conforme à l'invention, la gaine isolante de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant »).*

La gaine électriquement isolante représente la couche la plus externe du câble (i.e. également appelée gaine extérieure de protection).

### Elle comprend au moins un matériau polymère

Le choix du matériau polymère n'est pas limitatif et ceux-ci sont bien connus de l'homme du métier.

Selon une forme de réalisation préférée de l'invention, le matériau polymère est choisi parmi les polymères réticulés et non réticulés, les polymères du type inorganique et du type organique.

Le matériau polymère peut être un homo- ou un co-polymère ayant des propriétés thermoplastiques et/ou élastomères.

Les polymères du type inorganique peuvent être des polyorganosiloxanes.

Les polymères du type organique peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

Chaque câble d'énergie ou de télécommunication peut comprendre une pluralité d'éléments conducteurs allongés, chacun comportant une couche résistante au feu de matériau composite tel que décrit précédemment. Dans ce cas, la gaine électriquement isolante entoure la pluralité d'éléments conducteurs allongés de chaque câble résistant au feu.

Dans un mode de réalisation particulier, et bien que cela soit optionnel compte tenu de la présence de la couche isolante résistante au feu en matériau composite, chacun des câbles peut comprendre en outre au moins une couche isolante supplémentaire entre la couche isolante résistante au feu de matériau composite et l'élément électriquement conducteur allongé. Ainsi dans ce cas, la gaine électriquement isolante entoure la couche isolante résistante au feu de matériau composite et ladite couche isolante résistante au feu de matériau composite entoure l'élément conducteur allongé. Selon une autre forme de réalisation, il est également possible de déposer une couche isolante résistante au feu en matériau composite entre deux gaines, une gaine externe et une gaine intermédiaire qui recouvre le coeur du câble. Enfin, selon encore une autre forme de réalisation, il est possible de déposer deux couches isolantes résistante au feu en matériau composite lorsque par exemple le câble comporte plusieurs gaines isolantes.

Lorsqu'elle est présente, la couche électriquement isolante supplémentaire peut comprendre au moins un matériau polymère choisi parmi les polymères réticulés et non réticulés, les polymères du type inorganique et du type organique.

Le matériau polymère peut être un homo- ou un co-polymère ayant des propriétés thermoplastiques et/ou élastomères.

Le matériau polymère est de préférence non halogéné.

Les polymères du type inorganique peuvent être des polyorganosiloxanes.

Les polymères du type organique peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

Lorsqu'elle est présente, la couche électriquement isolante supplémentaire peut comprendre en outre, des charges ignifugeantes et/ou des charges inertes (ou charge non combustible).

Le choix des charges ignifugeantes et/ou des charges inertes n'est pas limitatif et celles-ci sont bien connues de l'homme du métier.

Les charges ignifugeantes peuvent être choisies parmi les charges hydratées, notamment parmi les hydroxydes métalliques tels que par exemple le dihydroxyde de magnésium (MDH) ou le trihydroxyde d'aluminium (ATH), et d'autres charges minérales telles que CaO ou les phyllosilicates.

Ces charges ignifugeantes agissent principalement par voie physique en se décomposant de manière endothermique (e.g. libération d'eau), ce qui a pour conséquence d'abaisser la température de la couche électriquement isolante et de limiter la propagation des flammes le long du câble. On parle notamment de propriétés de retard à la flamme, bien connues sous l'anglicisme « *flame retardant* ».

Les charges inertes peuvent être de la craie, du talc, de l'argile (e.g. le kaolin), du noir de carbone, ou des nanotubes de carbone.

La présente invention a pour deuxième objet un procédé de préparation d'un dispositif comprenant un câble d'énergie et/ou de télécommunication et/ou un accessoire pour câble tel que défini selon le premier objet de l'invention, ledit dispositif comprenant au moins une couche isolante résistante au feu à base d'un matériau composite comprenant au moins un matériau cimentaire représentant de 5 à 95 % en masse par rapport à la masse totale du matériau composite et au moins un matériau fibreux non tissé de structure souple et flexible, et éventuellement au moins un additif polymère, ledit procédé étant caractérisé en ce qu'il comprend au moins les étapes suivantes :
i) une étape de préparation d'une composition cimentaire comprenant :
   - au moins une composition géopolymère ou au moins un mélange constitué d'un ciment anhydre et d'eau, et éventuellement
   - au moins un additif polymère ;
ii) une étape d'application d'un matériau fibreux non tissé de structure souple et flexible :
   - soit autour d'un ou de plusieurs éléments conducteurs allongés et/ou autour d'une couche interne d'un câble d'énergie et/ou de télécommunication lorsque le dispositif est un câble, pour obtenir un ensemble câble/matériau fibreux,
   - soit autour d'au moins l'une des couches internes d'une jonction ou d'une terminaison lorsque le dispositif est un accessoire pour câble ; pour obtenir un ensemble accessoire pour câble/matériau fibreux ;
iii) une étape d'imprégnation de l'ensemble câble/matériau fibreux ou accessoire pour câble/matériau fibreux obtenu ci-dessus à l'étape précédente par ladite composition géopolymère ;
iv) une étape de durcissement de la composition géopolymère ou du mélange constitué d'un ciment anhydre conventionnel et d'eau (i.e. pâte de ciment) imprégnant ledit matériau fibreux, pour former une couche isolante résistante au feu à base dudit matériau composite.

Le procédé conforme à l'invention est rapide, simple et avantageux d'un point de vue économique. Il permet d'accéder à des câbles ou à des accessoires pour câbles présentant une bonne résistance au feu.

Le ciment anhydre conventionnel utilisé dans l'étape i) est tel que défini dans le premier objet de l'invention.

La composition géopolymère de l'étape i) est de préférence une composition géopolymère aluminosilicate.

La composition géopolymère de l'étape i) répond alors de préférence à la composition molaire suivante (I) :

w SiO₂ : x Al₂O₃ : y M₂O : z H₂O (I)

dans laquelle :
- M est choisi parmi Na, K, Li, Cs et l'un de leurs mélanges,
- w est une valeur comprise entre 0,1 et 8 environ,
- x est une valeur comprise entre 0,1 et 0,3 environ,
- y est une valeur comprise entre 0,05 et 0,2 environ,
- w est une valeur comprise entre 0,8 et 3 environ,
ladite composition comprenant de 40% à 79% en masse environ de matières solides (SiO₂, Al₂O₃, M₂O), par rapport à la masse totale de ladite composition.

Le rapport massique matières solides/eau dans ladite composition géopolymère détermine la cinétique de solidification lors de l'étape iv). Selon une forme de réalisation préférée de l'invention, le rapport massique matières solides/eau varie de 0,6 à 1,65 environ, et encore plus préférentiellement de 0,85 à 1,40 environ. Un tel rapport massique permet d'avoir une composition cimentaire assez fluide pour permettre l'imprégnation du matériau fibreux, et dont la cinétique de solidification est assez lente pour permettre l'application du matériau fibreux avant sa solidification.

L'étape i) est généralement effectuée à un pH élevé, notamment variant de 10 à 13.

Lorsque la composition cimentaire est une composition géopolymère aluminosilicate, l'étape i) comprend de préférence les sous-étapes suivantes :
i₁) une étape de préparation d'une solution aqueuse de silicate alcalin de rapport molaire SiO₂/M₂O allant de 1,65 à 3,4 environ, la concentration massique du silicate alcalin dans l'eau pouvant aller de 35 à 90 % environ, et
i₂) une étape de mélange d'un aluminosilicate sous forme de poudre, de rapport molaire Al₂O₃/SiO₂ allant de 0,4 à 0,8 avec la solution aqueuse de silicate alcalin préparée à l'étape précédente, la concentration massique de l'aluminosilicate dans la solution aqueuse de silicate alcalin préparée à l'étape précédente pouvant aller de 10 à 80% environ, et de préférence de 25% à 65% environ.

L'aluminosilicate peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes et l'un de leurs mélanges. Parmi ces composés, les aluminosilicates commercialisés par la société Imérys tels que le métakaolin sont préférés.

La solution aqueuse de silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

Le silicate alcalin peut être choisi parmi les silicates de sodium, les silicates de potassium et l'un de leurs mélanges. Les silicates alcalins commercialisés par la société Silmaco ou par la société PQ Corporation sont préférés.

La base MOH peut être choisie parmi KOH, NaOH et leurs mélanges.

L'étape i₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de l'étape i₁) et de l'aluminosilicate lors de l'étape i₂) et de ce fait la prise de la composition géopolymère.

A l'issue de l'étape i₂), la composition géopolymère présente une viscosité qui augmente avec le temps lorsqu'elle est exposée à l'air libre.

Selon une forme de réalisation préférée de l'invention, et lorsque le dispositif est un câble d'énergie ou de transmission, le matériau fibreux non tissé de structure souple et flexible se présente sous forme d'un ruban ou d'une bande et l'étape ii) d'application dudit matériau fibreux est alors réalisée par enroulement dudit ruban ou de ladite bande autour d'un ou de plusieurs éléments conducteurs allongés ou autour d'une couche interne dudit câble, ledit enroulement pouvant en outre être effectué avec des zones de recouvrement.

Selon une forme de réalisation particulière de l'invention, et lorsque le dispositif est un câble d'énergie ou de transmission, le procédé peut comprendre en outre une étape supplémentaire, avant, pendant ou après l'étape iv), de réalisation d'une gaine isolante de protection autour de la couche constituée dudit matériau fibreux imprégné de la composition cimentaire.

La réalisation de cette gaine extérieure de protection peut notamment être réalisée par extrusion.

L'étape iv) est généralement effectuée à température ambiante puisque la polymérisation (dans le cas de la formation du ciment géopolymère) ou l'hydratation (dans le cas de la formation du matériau cimentaire issu d'un mélange constitué d'un ciment anhydre conventionnel et d'eau) s'effectue à température ambiante.

La vitesse de durcissement de l'étape iv) peut aller de 30 à 300 minutes environ à 25°C environ (i.e. à la température ambiante).

Cependant, il est tout à fait possible de retarder le durcissement de l'étape iv) en ajoutant à la composition géopolymère au moins un agent retardateur de la prise en masse. Comme indiqué précédemment, l'agent retardateur est de préférence choisi parmi les lignosulfonates.

Les exemples suivants permettent d'illustrer la présente invention. Ils n'ont pas de caractère limitatif sur la portée globale de l'invention telle que présentée dans les revendications. Les rapports entre les oxydes sont des rapports molaires et les % indiqués sont en masse.

### EXEMPLES

Les matières premières utilisées dans les exemples, sont listées ci-après :
- Silicate de sodium de type « *waterglass* », Simalco, de formule Na₂O. 2 SiO₂, de rapport molaire SiO₂/Na₂O de 2 environ,
- Eau courante,
- Hydroxyde de potassium, Sigma Aldrich, de pureté > 85%,
- Aluminosilicate vendu sous la dénomination commerciale PoleStar^{®} 200R, par la société Imerys, de rapport molaire Al₂O₃/SiO₂ de 41/55 (i.e. de 0,745 environ),
- Fibres de polypropylène vendues sous la dénomination commerciale CELLOTIN PP6 par la société ZSCHIMMER & SCHWARZ.

Sauf indications contraires, toutes ces matières premières ont été utilisées telles que reçues des fabricants.

### EXEMPLE 1 : Préparation d'un câble résistant au feu conforme à l'invention

### 1.1. Préparation d'une composition géopolymère (étape i)

Une solution de silicate alcalin a été préparée en mélangeant 36 g de silicate de sodium, 20 g d'eau et 8 g d'hydroxyde de potassium. Puis 39 g d'aluminosilicate et 2,2 g de fibres de polypropylène ont été mélangés avec la solution aqueuse de silicate alcalin.

Ladite composition comprenait 80 % en poids environ de matières solides. Elle a immédiatement été utilisée dans l'étape suivante.

### 1.2. Préparation d'un câble résistant au feu

Deux constructions de câbles ont été évaluées :
- un assemblage de 2 conducteurs en cuivre ayant chacun une section de 1,5 mm², dénommé Assemblage 1 ;
- un assemblage de 4 conducteurs en cuivre ayant chacun une section de 1,5 mm², dénommé Assemblage 2.

Les conducteurs ont été assemblés suivant un pas de pairage défini. Un ruban papier non tissé ayant une épaisseur de 0,2 mm et une largeur de 30 mm a été enroulé ou posé en long autour de chacun des assemblages 1 et 2.

Chacun des assemblages 1 et 2 a ensuite été imprégné par trempage enduction dans la composition géopolymère préparée ci-dessus à l'étape précédente.

Chacun des assemblages 1 et 2 a ensuite été recouvert par extrusion à chaud d'une gaine protectrice polymère à base d'un mélange de polyéthylène à basse densité linéaire (PEBDL) et d'EVA et comportant 63 % en masse de charges inorganiques ignifugeantes (trihydrate d'alumine (ATH) et CaCO₃) ayant une épaisseur de 1,03 mm. On a ainsi obtenu des câbles d'énergie, respectivement CE1 et CE2 comportant une couche résistante au feu à base d'un matériau composite tel que défini dans le premier objet de l'invention.

### 1.3. Performances du câble

Les câbles CE1 et CE2 ainsi obtenus ont été évalués au regard de performances de leur résistance au feu. L'ensemble a été placé dans un four et exposé à une température proche de 1000°C pendant une période variant de 30 min à 2 heures (norme DIN 4102-12).

Les câbles CE1 et CE2 ont été également testés pour leurs performances de résistance à la flamme selon la méthode préconisée par la norme EN 50200, c'est-à-dire par exposition directe des câbles CE1 et CE2 à la flamme d'un brûleur au propane, donnant une température constante d'attaque théorique nominale de 842°C.

Les câbles conformes à l'invention ont présenté une résistance au feu de 90 min (E90) selon la norme DIN 4102-12 et de 121 minutes selon la norme EN 50200.

A titre comparatif, un câble non conforme à l'invention (CE3), préparé selon un procédé identique, mais ne comportant pas de couche de matériau composite à base de la composition géopolymère, a également été testé au regard de sa performance de résistance au feu selon la norme DIN 4102-12. Le câble CE3 a présenté une résistance au feu de seulement 31 min.

A titre comparatif, un autre câble non conforme à l'invention (CE4) préparé selon un procédé identique, mais dans lequel la couche de matériau composite à base de la composition géopolymère a été remplacé par un ruban d'aluminium d'une épaisseur de 25 µm, a également été testé au regard de sa performance de résistance à la flamme selon la norme EN 50200. Le câble CE4 a présenté une résistance au feu de seulement 17 min.

Par conséquent, ces essais démontrent que la présence de la couche de matériau composite permet d'améliorer de façon très significative la résistance au feu et à la flamme des câbles.

## Revendications

1. Dispositif comprenant un câble d'énergie et/ou de télécommunication et/ou un accessoire pour câble, **caractérisé en ce que** ledit câble et/ou ledit accessoire pour câble comprend au moins une couche isolante résistante au feu à base d'un matériau composite comprenant au moins un matériau cimentaire représentant de 5 à 95 % en masse par rapport à la masse totale du matériau composite et au moins un matériau fibreux non tissé de structure souple et flexible, **en ce que** ladite couche est une couche interne dudit câble ou dudit accessoire pour câble, et **en ce que** le matériau cimentaire est un matériau solide comprenant du silicium (Si), de l'aluminium (AI), du phosphate (P), de l'oxygène (O) et au moins un élément choisi parmi le potassium (K), le sodium (Na), le lithium (Li), le césium (Cs) et le calcium (Ca), ledit matériau solide étant un ciment géopolymère ou étant issu d'un mélange constitué d'un ciment anhydre et d'eau.

2. Dispositif selon la revendication 1, **caractérisé en ce que** la couche de matériau composite présente une épaisseur allant de 0,2 à 10 mm.

3. Dispositif selon la revendication 1 ou 2, **caractérisé en ce que** le matériau cimentaire est un ciment géopolymère aluminosilicate.

4. Dispositif selon l'une quelconque des revendications précédentes, **caractérisé en ce que** le ciment géopolymère est choisi parmi les composés dans lesquels le rapport molaire Si/AI varie de 1,9 à 3.

5. Dispositif selon l'une quelconque des revendications précédentes, **caractérisé en ce que** le ciment anhydre est du ciment blanc ou du ciment au laitier et aux cendres.

6. Dispositif selon l'une quelconque des revendications précédentes, **caractérisé en ce que** le matériau cimentaire représente de 70 à 90 % en masse par rapport à la masse totale du matériau composite.

7. Dispositif selon l'une quelconque des revendications précédentes, **caractérisé en ce que** le matériau fibreux non tissé est choisi parmi le papier, les fibres de verre, les matériaux non tissés fabriqués à partir de cellulose fonctionnalisée ou non fonctionnalisée, les matrices de polypropylène alvéolaires et les matrices à structure alvéolaire et/ou fibreuse fabriquées à partir de fibres naturelles d'acétate de cellulose.

8. Dispositif selon l'une quelconque des revendications précédentes, **caractérisé en ce que** le matériau fibreux se présente sous la forme d'une bande ou d'un ruban.

9. Dispositif selon l'une quelconque des revendications précédentes, **caractérisé en ce que** le matériau fibreux représente de 5 à 95 % en masse par rapport à la masse totale du matériau composite.

10. Dispositif selon l'une quelconque des revendications précédentes, **caractérisé en ce que** le matériau composite comprend en outre au moins un additif organique à structure polymère.

11. Dispositif selon la revendication 10, **caractérisé en ce que** l'additif polymère est choisi parmi le polypropylène, les copolymères de styrène-butadiène ; les copolymères de styrène-butadiène-éthylène ; les dérivés des copolymères de styrène-éthylène ; les copolymères d'éthylène et d'acétate de vinyle, les polyorganosiloxanes réticulés ; le polyéthylène ; les lignosulfonates ; la cellulose et ses dérivés ; et l'un de leurs mélanges.

12. Dispositif selon la revendication 10 ou 11, **caractérisé en ce que** l'additif polymère représente de 2 à 70 % en masse, par rapport à la masse totale du matériau composite.

13. Dispositif selon l'une quelconque des revendications précédentes, **caractérisé en ce que** la couche comportant au moins un matériau cimentaire comprend en outre un ou plusieurs agents retardant la prise en masse de la composition cimentaire à température ambiante.

14. Dispositif selon la revendication 13, **caractérisé en ce que** l'agent retardateur est choisi parmi les lignosulfonates.

15. Dispositif selon la revendication 13 ou 14, **caractérisé en ce que** l'agent retardateur représente de 5 à 60 % en masse, par rapport à la masse totale du matériau composite.

16. Procédé de préparation d'un dispositif comprenant un câble d'énergie et/ou de télécommunication et/ou un accessoire pour câble tel que défini à l'une quelconque des revendications précédentes, ledit dispositif comprenant au moins une couche isolante résistante au feu à base d'un matériau composite comprenant au moins un matériau cimentaire représentant de 5 à 95 % en masse par rapport à la masse totale du matériau composite et au moins un matériau fibreux non tissé de structure souple et flexible, et éventuellement au moins un additif polymère, ledit procédé étant **caractérisé en ce qu'**il comprend au moins les étapes suivantes :
i) une étape de préparation d'une composition cimentaire comprenant :
- au moins une composition géopolymère ou au moins un mélange constitué d'un ciment anhydre et d'eau, et éventuellement
- au moins un additif polymère ;
ii) une étape d'application d'un matériau fibreux non tissé de structure souple et flexible :
- soit autour d'un ou de plusieurs éléments conducteurs allongés ou autour d'une couche interne d'un câble d'énergie et/ou de télécommunication lorsque le dispositif est un câble, pour obtenir un ensemble câble/matériau fibreux,
- soit autour d'au moins l'une des couches internes d'une jonction ou d'une terminaison lorsque le dispositif est un accessoire pour câble ; pour obtenir un ensemble accessoire pour câble/matériau fibreux ;
iii) une étape d'imprégnation de l'ensemble câble/matériau fibreux ou accessoire pour câble/matériau fibreux obtenu ci-dessus à l'étape précédente par ladite composition géopolymère ;
iv) une étape de durcissement de la composition géopolymère ou du mélange constitué d'un ciment anhydre conventionnel et d'eau imprégnant ledit matériau fibreux, pour former une couche isolante résistante au feu à base dudit matériau composite.

17. Procédé selon la revendication 16, **caractérisé en ce que** la composition géopolymère de l'étape i) est une composition géopolymère aluminosilicate ayant la composition molaire suivante (I) :
w SiO₂ : x Al₂O₃ : y M₂O : z H₂O (I)
dans laquelle :
- M est choisi parmi Na, K, Li, Cs et l'un de leurs mélanges,
- w est une valeur comprise entre 0,1 et 8,
- x est une valeur comprise entre 0,1 et 0,3,
- y est une valeur comprise entre 0,05 et 0,2,
- w est une valeur comprise entre 0,8 et 3,
ladite composition comprenant de 40% à 79% en masse de matières solides par rapport à la masse totale de ladite composition.

18. Procédé selon la revendication 17, **caractérisé en ce que** le rapport massique matières solides/eau dans ladite composition géopolymère varie de 0,6 à 1,65.

19. Procédé selon la revendication 17 ou 18, **caractérisé en ce que** l'étape i) comprend les sous-étapes suivantes :
i₁) une étape de préparation d'une solution aqueuse de silicate alcalin de rapport molaire SiO₂/M₂O allant de 1,65 à 3,4, la concentration massique du silicate alcalin dans l'eau allant de 35 à 90 %, et
i₂) une étape de mélange d'un aluminosilicate sous forme de poudre, de rapport molaire Al₂O₃/SiO₂ allant de 0,4 à 0,8 avec la solution aqueuse de silicate alcalin préparée à l'étape précédente, la concentration massique de l'aluminosilicate dans la solution aqueuse de silicate alcalin préparée à l'étape précédente pouvant aller de 10 à 80%.

20. Procédé selon l'une quelconque des revendications 16 à 19, **caractérisé en ce que** le dispositif est un câble d'énergie ou de transmission, et **en ce que** le matériau fibreux non tissé de structure souple et flexible se présente sous forme d'un ruban ou d'une bande et l'étape ii) d'application dudit matériau fibreux est alors réalisée par enroulement dudit ruban ou de ladite bande autour d'un ou de plusieurs éléments conducteurs allongés ou autour d'une couche interne dudit câble, ledit enroulement pouvant en outre être effectué avec des zones de recouvrement.

21. Procédé selon l'une quelconque des revendications 16 à 20, **caractérisé en ce que** le dispositif est un câble d'énergie ou de transmission, et **en ce que** le procédé comprend en outre une étape supplémentaire, avant, pendant ou après l'étape iv), de réalisation d'une gaine isolante de protection autour de la couche constituée dudit matériau fibreux imprégné de la composition cimentaire.

## Patentansprüche

1. Vorrichtung, umfassend ein Energie- und/oder Telekommunikationskabel und/oder ein Kabelzubehör, **dadurch gekennzeichnet, dass** das Kabel und/oder das Kabelzubehör mindestens eine isolierende feuerbeständige Schicht auf der Grundlage eines Verbundmaterials umfasst, umfassend mindestens ein Zementmaterial, das 5 bis 95 Massenprozent mit Bezug auf die Gesamtmasse des Verbundmaterials darstellt, und mindestens eine Faservliesstoffmaterial mit biegsamer und flexibler Struktur, und dadurch, dass die Schicht eine interne Schicht des Kabels oder des Kabelzubehörs ist, und dadurch, dass das Zementmaterial ein festes Material ist, umfassend Silizium (Si), Aluminium (Al), Phosphat (P), Sauerstoff (O) und mindestens ein Element, ausgewählt aus Kalium (K), Natrium (Na), Lithium (Li), Cäsium (Cs) und Kalzium (Ca), wobei das feste Material ein Geopolymer-Zement ist oder aus einer Mischung stammt, die aus einem wasserfreien Zement und Wasser besteht.

2. Vorrichtung nach Anspruch 1, **dadurch gekennzeichnet, dass** die Schicht aus Verbundmaterial eine Dicke aufweist, die von 0,2 bis 10 mm reicht.

3. Vorrichtung nach Anspruch 1 oder 2, **dadurch gekennzeichnet, dass** das Zementmaterial ein Geopolymer-Alumosilikat-Zement ist.

4. Vorrichtung nach einem der vorhergehenden Ansprüche, **dadurch gekennzeichnet, dass** der Geopolymer-Zement ausgewählt ist aus Verbindungen, in denen das Molverhältnis Si/Al von 1,9 bis 3 variiert.

5. Vorrichtung nach einem der vorhergehenden Ansprüche, **dadurch gekennzeichnet, dass** der wasserfreie Zement weißer Zement oder Zement mit Schlacke und mit Asche ist.

6. Vorrichtung nach einem der vorhergehenden Ansprüche, **dadurch gekennzeichnet, dass** das Zementmaterial 70 bis 90 Massenprozent mit Bezug auf die Gesamtmasse des Verbundmaterials darstellt.

7. Vorrichtung nach einem der vorhergehenden Ansprüche, **dadurch gekennzeichnet, dass** das Faservliesstoffmaterial ausgewählt ist aus Papier, Glasfasern, Vliesmaterialien, hergestellt auf der Grundlage von funktionalisierter oder nicht funktionalisierte Cellulose, alveolaren Matrizen aus Polypropylen und Matrizen aus alveolarer und oder fasriger Struktur, hergestellt auf der Grundlage von natürlichen Fasern aus Celluloseacetet.

8. Vorrichtung nach einem der vorhergehenden Ansprüche, **dadurch gekennzeichnet, dass** das fasrige Material die Form eines Bands oder eines Streifens aufweist.

9. Vorrichtung nach einem der vorhergehenden Ansprüche, **dadurch gekennzeichnet, dass** das fasrige Material 5 bis 95 Massenprozent mit Bezug auf die Gesamtmasse des Verbundmaterials darstellt.

10. Vorrichtung nach einem der vorhergehenden Ansprüche, **dadurch gekennzeichnet, dass** das Verbundmaterial außerdem mindestens einen organischen Zusatzstoff mit polymerer Struktur umfasst.

11. Vorrichtung nach Anspruch 10, **dadurch gekennzeichnet, dass** der polymere Zusatzstoff ausgewählt ist aus Polypropylen, Styrol-Butadien-Copolymeren; Styrol-Butadien-Ethylen-Copolymeren; Derivaten der Styrol-Ethylen-Copolymere; Ethylen- und Vinylacetat-Copolymeren, vernetzten Polyorganosiloxanen; Polyethylen; Lignosulfonaten; Cellulose und ihren Derivaten; und einer ihrer Mischungen.

12. Vorrichtung nach Anspruch 10 oder 11, **dadurch gekennzeichnet, dass** der polymere Zusatzstoff 2 bis 70 Massenprozent mit Bezug auf die Gesamtmasse des Verbundmaterials darstellt.

13. Vorrichtung nach einem der vorhergehenden Ansprüche, **dadurch gekennzeichnet, dass** die Schicht, die mindestens ein Zementmaterial umfasst, außerdem eines oder mehrere Mittel umfasst, die die Massenzunahme der Zementzusammensetzung bei Raumtemperatur verzögern.

14. Vorrichtung nach Anspruch 13, **dadurch gekennzeichnet, dass** das Verzögerungsmittel ausgewählt ist aus den Lignosulfonaten.

15. Vorrichtung nach Anspruch 13 oder 14, **dadurch gekennzeichnet, dass** das Verzögerungsmittel 5 bis 60 Massenprozent mit Bezug auf die Gesamtmasse des Verbundmaterials darstellt.

16. Verfahren zur Herstellung einer Vorrichtung, umfassend ein Energie- und/oder Telekommunikationskabel und/oder ein Kabelzubehör, wie in einem der vorhergehenden Ansprüche definiert, wobei die Vorrichtung mindestens eine feuerbeständige isolierende Schicht auf der Grundlage eines Verbundmaterials umfasst, umfassend mindestens ein Zementmaterial, das 5 bis 95 Massenprozent mit Bezug auf die Gesamtmasse des Verbundmaterials darstellt, und mindestens eine Faservliesstoffmaterial mit biegsamer und flexibler Struktur, und eventuell mindestens einen polymeren Zusatzstoff, wobei das Verfahren **dadurch gekennzeichnet ist, dass** es mindestens die folgenden Schritte umfasst:
i) einen Schritt des Herstellens einer Zementzusammensetzung, umfassend:
- mindestens eine geopolymere Zusammensetzung oder mindestens eine Mischung, die aus einem wasserfreien Zement und Wasser besteht, und eventuell
- mindestens einen polymeren Zusatzstoff;
ii) einen Schritt des Anwendens eines Faservliesstoffmaterials mit biegsamer und flexibler Struktur:
- entweder um ein oder mehrere verlängerte leitende Elemente oder um eine innere Schicht eines Energie- und/oder Telekommunikationskabels, wenn die Vorrichtung ein Kabel ist, um eine Einheit Kabel/Fasermaterial zu erhalten,
- oder um mindestens eine der inneren Schichten einer Verbindung oder einer Endung, wenn die Vorrichtung ein Kabelzubehör ist; um eine Einheit Kabelzubehör/Fasermaterial zu erhalten;
iii) einen Schritt des Imprägnierens der Einheit Kabel/Fasermaterial oder Kabelzubehör/Fasermaterial, erhalten oben im vorhergehenden Schritt durch die geopolymere Zusammensetzung;
iv) einen Schritt des Aushärtens der geopolymeren Zusammensetzung oder der Mischung, die aus einem herkömmlichen wasserfreien Zement und Wasser besteht, die das Fasermaterial imprägniert, um eine feuerbeständige isolierende Schicht auf der Grundlage des Verbundmaterials zu bilden.

17. Verfahren nach Anspruch 16, **dadurch gekennzeichnet, dass** die geopolymere Zusammensetzung von Schritt i) eine Geopolymer-Aluminosilikat-Zusammensetzung mit der folgenden molaren Zusammensetzung (I) ist:
w SiO₂: x Al₂O₃: y M₂O: z H₂O (I)
wobei:
- M ausgewählt ist aus Na, K, Li, Cs und einer ihrer Mischungen,
- w ein Wert im Bereich zwischen 0,1 und 8 ist,
- w ein Wert im Bereich zwischen 0,1 und 0,3 ist,
- y ein Wert im Bereich zwischen 0,05 und 0,2 ist,
- w ein Wert im Bereich zwischen 0,8 und 3 ist,
wobei die Zusammensetzung zwischen 40 Massenprozent und 79 Massenprozent Feststoffe mit Bezug auf die Gesamtmasse der Zusammensetzung umfasst.

18. Verfahren nach Anspruch 17, **dadurch gekennzeichnet, dass** das Massenverhältnis Feststoffe/Wasser in der geopolymeren Zusammensetzung von 0,6 bis 1,65 variiert.

19. Verfahren nach Anspruch 17 oder 18, **dadurch gekennzeichnet, dass** der Schritt i) die folgenden Unterschritte umfasst:
i1) einen Schritt des Zubereitens einer wässrigen Lösung aus Alkalisilikat mit einem Molverhältnis SiO₂/M₂O, das von 1,65 bis 3,4 reicht, wobei die Massenkonzentration des Alkalisilikats in Wasser von 35 bis 90 % reicht, und
i2) einen Schritt des Mischens eines Aluminosilikats in Form eines Pulvers mit einem Molverhältnis Al₂O₃/SiO₂, das von 0,4 bis 0,8 reicht, mit der wässrigen Lösung aus Alkalisilikat, die im vorhergehenden Schritt zubereitet wurde, wobei die Massenkonzentration des Aluminosilikats in der wässrigen Lösung aus Alkalisilikat, die im vorhergehenden Schritt zubereitet wurde, von 10 bis 80 % reichen kann.

20. Verfahren nach einem der Ansprüche 16 bis 19, **dadurch gekennzeichnet, dass** die Vorrichtung ein Energie- oder Übertragungskabel ist, und dadurch, dass das Faservliesstoffmaterial mit biegsamer und flexibler Struktur die Form eines Bands oder eines Streifens aufweist und Schritt ii) des Anwendens des Fasermaterials nun durch Rollen des Bands oder des Streifens um ein oder mehrere verlängerte leitende Elemente oder um eine innere Schicht des Kabels durchgeführt wird, wobei das Rollen außerdem mit Überlappungsbereichen durchgeführt werden kann.

21. Verfahren nach einem der Ansprüche 16 bis 20, **dadurch gekennzeichnet, dass** die Vorrichtung ein Energie- oder Übertragungskabel ist, und dadurch, dass das Verfahren außerdem einen zusätzlichen Schritt vor, während und nach Schritt iv) des Durchführens einer Schutzisolierhülle um die Schicht umfasst, die aus dem Fasermaterial besteht, das von der Zementzusammensetzung imprägniert ist.

## Claims

1. A device comprising a power and/or telecommunications cable and/or a cable accessory, **characterized in that** said cable and/or said cable accessory comprises at least one fire-resistant insulating layer based on a composite material comprising at least one cement material representing from 5 to 95 % by weight relative to the total weight of the composite material, and at least one nonwoven fibrous material of soft, flexible structure, **in that** said layer is an inner layer of said cable or of said cable accessory, and **in that** the cement material is a solid material comprising silicon (Si), aluminium (Al), phosphate (P), oxygen (O) and at least one element selected from among potassium (K), sodium (Na), lithium (Li), caesium (Cs) and calcium (Ca), said solid material being a geopolymer cement or being derived from a mixture composed of an anhydrous cement and water.

2. The device according to claim 1, **characterized in that** the layer of composite material has a thickness ranging from 0.2 to 10 mm.

3. The device according to claim 1 or 2, **characterized in that** the cement material is an aluminosilicate geopolymer cement.

4. The device according to any of the preceding claims, **characterized in that** the geopolymer cement is selected from among compounds having a Si/AI molar ratio varying from 1.9 to 3.

5. The device according to any of the preceding claims, **characterized in that** the anhydrous cement is white cement or a fly ash/slag cement.

6. The device according to any of the preceding claims, **characterized in that** the cement material represents from 70 to 90 % by weight relative to the total weight of the composite material.

7. The device according to any of the preceding claims, **characterized in that** the nonwoven fibrous material is selected from among paper, glass fibre, nonwoven materials manufactured from functionalized or non-functionalized cellulose, cellular polypropylene matrixes and matrixes having a cellular and/or fibrous structure manufactured from natural cellulose acetate fibres.

8. The device according to any of the preceding claims, **characterized in that** the fibrous material is in the form of a strip or tape.

9. The device according to any of the preceding claims, **characterized in that** the fibrous material represents from 5 to 95 % by weight relative to the total weight of the composite material.

10. The device according to any of the preceding claims, **characterized in that** the composite material further comprises at least one polymer-structured organic additive.

11. The device according to claim 10, **characterized in that** the polymer additive is selected from among polypropylene, copolymers of styrene-butadiene; copolymers of styrene-butadiene-ethylene; derivatives of styrene-ethylene copolymers; copolymers of ethylene and vinyl acetate, crosslinked polyorganosiloxanes; polyethylene; lignosulfonates; cellulose and derivatives thereof; and one of the mixtures thereof.

12. The device according to claim 10 or 11, **characterized in that** the polymer additive represents from 2 to 70 % by weight relative to the total weight of the composite material.

13. The device according to any of the preceding claims, **characterized in that** the layer comprising at least one cement material further comprises one or more setting retarders of the cement composition at ambient temperature.

14. The device according to claim 13, **characterized in that** the retarder agent is selected from among lignosulfonates.

15. The device according to claim 13 or 14, **characterized in that** the retarder agent represents from 5 to 60 % by weight relative to the total weight of the composite material.

16. A method for preparing a device comprising a power and/or telecommunications cable and/or a cable accessory such as defined in any of the preceding claims, said device comprising at least one fire-resistant insulating layer based on a composite material comprising at least one cement material representing from 5 to 95 % by weight relative to the total weight of the composite material, and at least one nonwoven fibrous material of soft, flexible structure, and optionally at least one polymer additive, said method being **characterized in that** it comprises at least the following steps:
i) a step to prepare a cement composition comprising:
- at least one geopolymer composition or at least one mixture composed of an anhydrous cement and water, and optionally:
- at least one polymer additive;
ii) a step to apply a nonwoven fibrous material of soft, flexible structure:
- either around one or more elongate conductive elements or around an inner layer of a power and/or telecommunications cable when the device is a cable, to obtain a cable/fibrous material assembly,
- or around at least one of the inner layers of a joint or termination when the device is a cable accessory, to obtain a cable accessory/fibrous material assembly;
iii) a step to impregnate the cable/fibrous material assembly or cable accessory/fibrous material assembly obtained above at the preceding step, with said geopolymer composition;
iv) a step to harden the geopolymer composition or mixture composed of a conventional anhydrous cement and water impregnating said fibrous material, to form a fire-resistant insulating layer based on said composite material.

17. The method according to claim 16, **characterized in that** the geopolymer composition at step i) is an aluminosilicate geopolymer composition having the following molar composition (I):
w SiO₂ : x Al₂O₃ : y M₂O : z H₂O (I)
where:
- M is selected from among Na, K, Li, Cs and one of the mixtures thereof,
- w is a value of between 0.1 and 8,
- x is a value of between 0.1 and 0.3,
- y is a value of between 0.05 and 0.2,
- z is a value of between 0.8 and 3:
said composition comprising from 40 % to 79 % by weight of solid materials relative to the total weight of said composition.

18. The method according to claim 17, **characterized in that** the weight ratio of solid materials/water in said geopolymer composition varies from 0.6 to 1.65.

19. The method according to claim 17 or 18, **characterized in that** step i) comprises the following sub-steps:
i₁) a step to prepare an aqueous alkaline silicate solution having a SiO₂/M₂O molar ratio ranging from 1.65 to 3.4, the weight concentration of alkaline silicate in water ranging from 35 to 90 %, and
i₂) a step to mix an aluminosilicate in powder form having an Al₂O₃/SiO₂ molar ratio ranging from 0.4 to 0.8 with the aqueous alkaline silicate solution prepared at the preceding step, the weight concentration of aluminosilicate in the aqueous alkaline silicate solution prepared at the preceding step possibly ranging from 10 to 80 %.

20. The method according to any of claims 16 to 19, **characterized in that** the device is a power or telecommunications cable, and **in that** the nonwoven fibrous material of soft, flexible structure is in the form of a tape or strip, and step ii) to apply said fibrous material is then performed by winding said tape or said strip around one or more elongate conductive elements or around an inner layer of said cable, said winding possibly also being performed with overlapping zones.

21. The method according to any of claims 16 to 20, **characterized in that** the device is a power or telecommunications cable, and **in that** the method further comprises an additional step before, during or after step iv), at which a protective insulating sheath is formed around the layer composed of said fibrous material impregnated with the cement composition.
